Europäisches Patentamt

(19) European Patent Office

Office européen des brevets

(11) EP 0 562 199 B1

(12) **FASCICULE DE BREVET EUROPEEN**

(45) Date de publication et mention
de la délivrance du brevet:
**30.12.1998 Bulletin 1998/53**

(51) Int. Cl.$^6$: **C04B 35/80**, C04B 26/28

(21) Numéro de dépôt: **92400863.4**

(22) Date de dépôt: **27.03.1992**

(54) **Articles isolants à base de fibres minérales et leur procédé de fabrication**

Isolierende Artikel aus Mineralfasern und Verfahren zu ihrer Herstellung

Isolating articles of mineral fibers and process for their production

(84) Etats contractants désignés:
**AT BE CH DE DK ES GB GR IT LI LU NL SE**

(43) Date de publication de la demande:
**29.09.1993 Bulletin 1993/39**

(73) Titulaire: **RHODIA CHIMIE**
**92408 Courbevoie Cédex (FR)**

(72) Inventeurs:
• **Besnard, Marie-Madeleine**
**F-92160 Antony (FR)**
• **Brenner, Fabrice**
**F-67160 Wissembourg (FR)**
• **Knipper, Magali**
**F-75019 Paris (FR)**

(74) Mandataire:
**Seugnet, Jean Louis et al**
**RHODIA SERVICES,**
**Direction de la Propriété Industrielle**
**25, quai Paul Doumer**
**92408 Courbevoie Cedex (FR)**

(56) Documents cités:
**EP-A- 338 473          EP-A- 347 810**
**CH-A- 263 579          FR-A- 2 481 730**
**GB-A- 2 155 944        US-A- 4 190 492**

• **Kirk-Othmer, Encyclopedia of Chemical**
**Technology, 3ème Edition, 1982, Vol.21, page**
**503**

**Description**

La présente invention concerne des articles isolants thermiques à base de fibres minérales, notamment des plaques, des panneaux ou des objets moulés.

L'invention vise également un procédé pour la fabrication de tels articles.

Les articles à base de fibres minérales sont utilisés comme matériaux d'isolation pouvant supporter de très hautes températures, par exemple en tant que panneaux de protection contre le feu, plaques isolantes réfractaires dans les fours thermiques et chambre de combustion.

Les articles isolants à base de fibres céramiques ou de laines minérales sont des produits connus (voir par exemple EP-A-347810). D'une manière habituelle, leur préparation nécessite l'utilisation d'un liant organique tels que l'amidon, l'alcool polyvinylique, ou l'acétate de polyvinyle. La teneur en agent liant varie en fonction de la nature de la matière minérale, mais est généralement comprise entre 7 et 15 % en poids par rapport à la matière sèche. Une telle quantité de matière organique est un inconvénient non seulement d'un point de vue économique, mais également d'un point de vue technique. En effet, de tels articles isolants, lorsqu'ils sont soumis ultérieurement à des températures élevées, libèrent de grandes quantités de fumées dues à la calcination des matières organiques. La destruction des matières organiques lors de la calcination provoque un diminution des propriétés mécaniques du matériau. Ceci est d'autant plus sensible que la teneur en matières organiques est élevée.

Par ailleurs, les articles isolants sont généralement préparés à partir d'une bouillie aqueuse dont on élimine l'eau, par exemple par égouttage. Avec les liants organiques employés jusqu'à présent, les eaux éliminées contiennent encore de fortes concentrations en matières organiques, réduisant ainsi leur teneur dans l'article fini. D'autre part, soit lesdites eaux sont recyclées, il est alors nécessaire de réajuster les teneurs en liant pour des fabrications ultérieures, soit les eaux sont rejetées à la rivière, créant des problèmes de pollution.

La présente invention a notamment pour but de proposer des articles à base de fibres minérales, notamment plaques, panneaux et objets moulés, présentant une émission de fumées réduite lors du traitement à température élevée. L'invention a encore pour objet de proposer un procédé de fabrication d'articles à base de fibres minérales permettant de réduire la proportion de liants organiques, d'obtenir des eaux résiduelles pures et d'accroître les caractéristiques physiques et mécaniques des articles formés. Un dernier objet de l'invention concerne des articles isolants cuits.

L'article isolant thermique, objet de la présente invention, est caractérisé en ce qu'il comporte des fibres minérales, au moins une charge minérale, et un agent liant consistant en un mélange de gomme xanthane et d'amidon cationique.

D'une façon générale, on entend par fibres les filaments ou fibrilles indépendants de longueur et diamètre variables, de même que les faisceaux ou touffes de ces filaments ou fibrilles. Les fibres ont favorablement une longueur de 0,1 à 50 mm de préférence de 0,1 à 15 mm et un diamètre moyen de 1 à 100 microns, de préférence de 1 à 10 microns. Des exemples de fibres minérales incluent les fibres renforçantes haute performance comme les fibres de bore, les fibres de carbone, les fibres de verre, les fibres céramiques telles que les fibres d'alumine, silice-alumine et de silice-alumine modifiées par d'autres oxydes tels que les oxydes de chrome, de bore, de zirconium, de calcium, de magnésium, les fibres d'oxyde de titane, de carbure de silicium, de nitrure de silicium, de carbonitrure de silicium, de nitrure de bore, ainsi que les laines minérales comme la laine de diabase, la laine de roche, la laine de laitier, la laine de basalte. Toutes ces fibres peuvent être utilisées seules ou en mélange entre elles.

Comme charges minérales pulvérulentes convenables pour la fabrication de panneaux d'isolation, on peut citer les silices en particulier les silices colloïdales, les alumines, les silicates d'aluminium, le kaolin, la bentonite, la wallastonite, la magnésie, le carbonate de calcium, le talc, l'oxyde de zircone, et plus généralement tout composé minéral utilisé pour fabriquer des articles isolants et/ou réfractaires. Ces diverses charges peuvent être associées à des charges légères comme la perlite expansée, la vermiculite exfoliée et autres. Les charges minérales permettant d'améliorer la floculation de l'agent liant, telles la bentonite et les silices colloïdales, sont préférées.

Les amidons cationiques sont des produits connus, disponibles dans le commerce. Ils peuvent être obtenus par modification chimique des amidons naturels au moyen de composés portant des groupes amines tertiaires ou quaternaires.

La gomme xanthane est un polysaccharide disponible dans le commerce, obtenu par fermentation d'une source carbonée par un microorganisme tels ceux appartenant au genre Xanthomonas, et plus spécifiquement les espèces Xanthomonas begoniae, Xanthomonas campestris, Xanthomonas carotae, Xanthomonas hedera, Xanthomonas incanae, Xanthomonas malvacearum, Xanthomonas papaveri cola, Xanthomonas phaseoli, Xanthomonas pisi, Xanthomonas vasculorum, Xanthomonas vericatoria, Xanthomonas vitians, Xanthomonas pelargonii.

La dénomination gomme xanthane inclut les produits traités et modifiés comme la gomme xanthane désacétylée, la gomme xanthane dépyruvatisée, les complexes gomme xanthane-glyoxal.

La composition pondérale de l'article isolant est fonction des propriétés physiques et mécaniques souhaitées. Les plaques et panneaux d'isolation thermique renferment en général de 30 à 90 %, de préférence de 40 à 85 % en poids de fibres minérales et de 5 à 60 %, de préférence de 10 à 50 % de charges minérales. L'agent liant, selon une caractéristique préférentielle de l'invention, est présent dans l'article en une quantité de 2 à 10 % en poids, avantageusement de 3 à 6 %. Le rapport pondéral gomme xanthane/amidon cationique est compris entre 1/2 et 1/10 et de préférence entre 1/4 et 1/8.

L'article isolant thermique selon l'invention peut également comporter de faibles quantités d'au moins un additif floculant tel que les polymères synthétiques anioniques, l'ammoniaque ou les composés ammoniums quaternaires.

A titre de polymères synthétiques anioniques, on peut citer plus particulièrement les acides polyacryliques et polyméthacryliques.

A titre de composés ammoniums quaternaires, on peut citer plus particulièrement les sels de n alkyltrimethylammonium, de n dialkyldiméthylammonium, de n alkyldime-thylbenzylammonium, de n alkylpyridinium, dans lesquels la chaîne alkyl contient de 1 à 30, de préférence de 8 à 24 atomes de carbone.

Généralement l'article isolant comporte de 1 à 2 % en poids dudit additif floculant par rapport au poids de l'agent liant.

L'invention concerne également un procédé de préparation d'un article isolant thermique caractérisé en ce qu'on effectue les étapes suivantes :

a) on mélange avec de l'eau des fibres minérales, au moins une charge minérale, un agent liant consistant en un mélange de gomme xanthane et d'amidon cationique et éventuellement au moins un additif floculant tel qu'un polymère anionique synthétique, de l'ammoniaque et/ou un composé ammonium quaternaire, de sorte à former une bouillie.

b) on met ladite bouillie en forme,

c) on sèche la bouillie mise en forme.

D'une manière avantageuse, l'étape a) de formation de la bouillie est réalisée en dispersant les fibres minérales dans l'eau ; on rajoute alors successivement dans cette dispersion, la charge minérale, la gomme xanthane et finalement l'amidon cationique et éventuellement ledit additif floculant. Préférentiellement la gomme xanthane et l'amidon sont introduits en solution dans une partie de l'eau servant à former la bouillie.

Généralement, on procède de sorte à ce que la teneur en matières sèches de la bouillie soit comprise entre 1 et 10 % en poids, de préférence de 4 à 6 % en poids par rapport au poids total de la bouillie.

La concentration du mélange de gomme xanthane et d'amidon dans la bouillie peut être compris entre 0,02 et 1% en poids de préférence de 0,3 à 0,06% en poids par rapport au poids total de bouillie.

L'étape b) de mise en forme de la bouillie peut se faire par coulée, moulage, calandrage et/ou pressage. Il peut être avantageux, avant ladite mise en forme, d'essorer la bouillie, de sorte à obtenir une pâte partiellement déshydratée.

Le séchage peut être effectué à une température comprise entre la température ambiante, soit environ 18° C et 250° C. De préférence, le séchage est effectué entre 100 et 180° C. Habituellement, on sèche de sorte à obtenir une humidité résiduelle inférieure à 2 % de préférence inférieure à 1%.

L'invention concerne aussi un procédé de préparation d'un article isolant thermique cuit caractérisé en ce qu'il est susceptible d'être obtenu par cuisson d'un article isolant tel que décrit ci-dessus. La température de cuisson est fonction des matières minérales constitutives dudit article. Cette température est habituellement comprise entre 300 et 1 600° C, plus généralement 500°C à 1 400°C.

Les examples ci-dessous ont pour but d'illustrer la présente invention.

EXEMPLE 1

La composition suivante est employée (en % en poids) pour la fabrication d'un panneau d'isolation :

| | |
|---|---|
| - Fibres céramiques alumine-silice | 78,3 |
| - Kaolin (35 % $Al_2O_3$) | 17,0 |
| - Amidon cationique | 4,0 |
| - Gomme xanthane | 0,7 |
| | $\overline{100}$ |

Des paaneaux à base de fibres minérales maintenues en une structure cohérente sont préparés en utilisant un matériau fibreux consistant en des fibres céramiques alumine-silice auxquelles sont ajoutées le kaolin et un mélange liant amidon-gomme xanthane.

EP 0 562 199 B1

On introduit dans l'eau les fibres puis la gomme xanthane sous forme d'une solution aqueuse dans laquelle est dispersé le kaolin.

Le mélange est agité 10 minutes, puis l'agitation est ralentie avant l'addition de l'amidon. L'amidon est introduit dans le mélange sous forme d'une solution aqueuse à 5 % en poids d'amidon. Cette dernière solution est préparée par addition de poudre d'amidon dans de l'eau portée à ébullition de sorte à obtenir la gélatinisation de l'amidon.

La suspension ainsi obtenue est versée dans un moule dont la base est constituée par un écran en plastique perforé. Après un drainage naturel, une couche de matière est formée à la surface de l'écran. La matière humide est alors soumise à une dépression de sorte à obtenir l'épaisseur souhaitée. Le produit contient encore 60-65 % d'eau. Il est retiré du moule puis placé dans un four.

Le séchage dans le four est réalisée à un température de 180° C avec de l'air chaud circulant, pendant 2 heures. L'opération de séchage peut être poursuivie pendant 10-12 heures à 120° C, jusqu'à atteindre une teneur en humidité inférieure à 1 %. Le produit sec peut, après refroidissement, être soumis à toute opération de finition, dont la nature dépend des applications ultérieures envisagées.

L'article obtenu avec la composition donnée ci-dessus présentent les caractéristiques suivantes, sur la base d'un panneau dont l'épaisseur est de 20 mm :

| | |
|---|---|
| - Masse volumique | 290 kg/m$^3$ |
| - Module de rupture en flexion à 20° C et 50 % d'humidité relative (HR) | 15 kg/cm$^3$ |
| - Résistance à la compression sous un écrasement de 10 % (20° C - 50 % HR) | 3 kg/cm$^3$ |
| - Perte au feu après 5 heures de cuisson à 1 000° C | 5 % |
| - Retrait linéaire en pallier après 24 heures à 1 260° C. | 3 % |
| - Conductivité thermique à 1 000° C (ASTM C-201) | 0.20 W/M.°K |

EXEMPLE 2

On fabrique un panneau selon le même procédé que l'exemple 1, mais avec la composition suivante :

| | |
|---|---|
| - Fibres céramiques alumine-silice | 22,5 |
| - Laine minérale (du type Rockwool Lapinus) | 59,3 |
| - Kaolin (35 % Al$_2$O$_3$) | 13,5 |
| - Amidon cationique | 4,0 |
| - Gomme xanthane | 0,7 |
| | 100 |

L'article obtenu présente les caractéristiques suivantes :

| | |
|---|---|
| - Masse volumique | 300 kg/m$^3$ |
| - Module de rupture en flexion à 20° C et 50 % (HR) | 13 kg/cm$^3$ |
| - Résistance à la compression sous un écrasements de 10 % (120° C - 50 % HR) | 2,7 kg/cm$^3$ |
| - Perte au feu après 5 heures de cuisson à 800° C | 5 % |
| - Retrait linéaire en pallier après 24 heures à 950° C. | 1,4 % |
| - Conductivité thermique à 800° C (ASTM C-201) | 0,15 W/M.°K |

4

### EXEMPLE 3

On procède comme dans l'exemple 2, avec les produits suivants :

| | |
|---|---|
| - Fibres céramiques alumine-silice | 21,0 |
| - Laine minérale (du type diabase) | 31,8 |
| - Kaolin (35 % $Al_2O_3$) | 20,0 |
| - Perlite expansée de densité 80 g/l (taille moyenne-300 microns) | 23,0 |
| - Amidon cationique | 3,5 |
| - Gomme xanthane | 0,7 |
| | $\overline{100}$ |

La formulation est employée pour renforcer des constructions réfractaires isolantes capables de résister à des températures supérieures à 1 000° C.

La perlite expansée est ajoutée après l'amidon de façon à éviter l'écrasement des petits grains de perlite pendant l'agitation.

Cet article a les caractéristiques suivantes :

| | |
|---|---|
| - Masse volumique | 290 kg/m$^3$ |
| - Module de rupture en flexion à 20° C et 50 % (HR) | 11 kg/cm$^3$ |
| - Résistance à la compression sous un écrasements de 10 % (20° C - 50 % HR) | 4,5 kg/cm$^3$ |
| - Perte au feu après 5 heures de cuisson à 800° C | 5,5 % |
| - Retrait linéaire en pallier après 24 heures à 800° C. | 0,8 % |
| - Conductivité thermique à 800° C (ASTM C-201) | 0,14 W/M.°K |

### EXEMPLE 4

La formulation de l'exemple 3 est améliorée en utilisant de la vermiculite de l'ordre du micron à la place de la perlite expansée. La qualité de vermiculite exfoliée utilisée a une densité non tassée de 130 g/l et un diamètre moyen d'environ 400 microns. L'article obtenu a les propriétés suivantes :

| | | |
|---|---|---|
| - Masse volumique | | 300 kg/m$^3$ |
| - Retrait linéaire | à 800° C | 0,4 % |
| | à 1 000° C | 0,8 % |

### EXEMPLE 5

on procède comme dans l'exemple 2 avec la formulation suivante :

| | |
|---|---|
| - Fibres céramiques | 13,0 |

(suite)

| | |
|---|---|
| - Laine minérale (du type Rokwool lapinus) | 36,0 |
| - Kaolin (35 % $Al_2O_3$) | 23,7 |
| - Farine de silice | 22,0 |
| - Amidon cationique | 4,5 |
| - Gomme xanthane | 0,8 |
| | $\overline{100,3}$ |

L'article obtenu présente les propriétés suivantes :

| | |
|---|---|
| - Masse volumique | 650 kg/m$^3$ |
| - Module de rupture en flexion à 20° C et 50 % (HR) | 55 kg/cm$^3$ |
| - Résistance à la compression sous un écrasements de 10 % (20° C - 50 % HR) | 10 kg/cm$^3$ |
| - Perte au feu après cuisson à 800° C | 6,5 % |
| - Retrait linéaire à 800° C | 0,5 % |
| à 1 050° C | 1,5 % |
| - Conductivité thermique à 100° C (ASTM C-201) | 0,12 W/M.°K |

L'article obtenu après séchage constitue un bouclier thermique qui, lorsqu'il est est soumis à une flamme directe, ne se désintègre pas ni ni s'effrite. Il est résistant aux chocs thermiques et peut résister à des températures supérieures à 1 050° C.

**Revendications**

1. Article isolant thermique caractérisé en ce qu'il comporte des fibres minérales, au moins une charge minérale et un agent liant consistant en un mélange de gomme xanthane et d'amidon cationique.

2. Article isolant thermique selon la revendication 1 caractérisé en ce qu'il est sous forme de panneau, de plaque ou d'un objet moulé.

3. Article isolant thermique selon l'une des revendications 1 et 2 caractérisé en ce qu'il comport de 30 à 90 % en poids de fibres minérales, de 5 à 60 % en poids d'au moins une charge minérale et de 2 à 10 % en poids dudit agent liant.

4. Article isolant thermique selon l'une des revendications 1 à 3 caractérisé en ce que le rapport pondéral entre la gomme xanthane et l'amidon cationique est compris entre 1/2 et 1/10, de préférence entre 1/4 et 1/8.

5. Article isolant thermique selon l'une des revendications 1 à 4 caractérisé en ce que les fibres minérales sont des fibres céramiques.

6. Article isolant thermique selon l'une des revendications 1 à 5 caractérisé en ce que la charge minérale est une silice colloidale ou de la bentonite.

7. Article isolant thermique selon l'une des revendications 1 à 6 caractérisé en ce qu'il comporte en outre au moins un additif floculant tel qu'un polymère synthétique anionique, de l'ammoniaque et/ou un composé ammonium quaternaire.

8. Procédé de préparation d'un article isolant thermique caractérisé en ce qu'on effectue les étapes suivantes :

   a) on mélange avec de l'eau des fibres minérales, au moins une charge minérale, un agent liant consistant en un mélange de gomme xanthane et d'amidon cationique et éventuellement au moins un additif floculant tel qu'un polymère anionique synthétique, de l'ammoniaque et/ou un composé ammonium quaternaire, de sorte à former une bouillie,

b) on met ladite bouillie en forme,

c) on sèche la bouillie mise en forme.

9. Procédé selon la revendication 8 caractérisé en ce que ladite bouillie est mise en forme par coulée, moulage, calandrage et/ou pressage.

10. Procédé selon l'une des revendications 8 et 9 caractérisé en ce que la bouillie mise en forme est essorée de sorte à obtenir une pâte partiellement déshydratée.

11. Procédé selon l'une des revendication 8 à 11 caractérisé en ce que ladite bouillie comporte de 1 à 10 % en poids, de préférence de 4 à 6 % en poids de matière sèche.

12. Procédé de préparation d'articles isolants thermiques cuits, caractérisé en ce que l'on cuit un article isolant thermique selon l'une quelconque des revendications 1 à 7 ou un article isolant thermique obtenu par le procédé selon l'une quelconque des revendications 8 et 11.

## Claims

1. A heat insulating article, characterized in that it comprises mineral fibres, at least one mineral filler and a binding agent consisting of a mixture of xanthane gum and cationic starch.

2. A heat insulating article according to claim 1, characterized in that it is in the form of a panel, a plate or a moulded object.

3. A heat insulating article according to claim 1 or claim 2, characterized in that it comprises 30% to 90% by weight of mineral fibres, 5% to 60% by weight of at least one mineral filler and 2% to 10% by weight of said binding agent.

4. A heat insulating article according to any one of claims 1 to 3, characterized in that the weight ratio between the xanthane gum and the cationic starch is in the range 1/2 to 1/10, preferably in the range 1/4 to 1/8.

5. A heat insulating article according to any one of claims 1 to 4, characterized in that the mineral fibres are ceramic fibres.

6. A heat insulating article according to any one of claims 1 to 5, characterized in that the mineral filler is a colloidal silica or bentonite.

7. A heat insulating article according to any one of claims 1 to 6, characterized in that it further comprises at least one flocculating additive such as a synthetic anionic polymer, ammonia and/or a quaternary ammonium compound.

8. A process for preparing a heat insulating article, characterized in that the following steps are carried out:

a) mineral fibres, at least one mineral filler, a binding agent consisting of a mixture of xanthane gum and cationic starch, and optionally at least one flocculating additive such as a synthetic anionic polymer, ammonia and/or a quaternary ammonium compound are mixed with water to form a slurry,

b) said slurry is formed;

c) the formed slurry is dried.

9. A process according to claim 8, characterized in that said slurry is formed by casting, moulding, rolling and/or pressing.

10. A process according to claim 8 or claim 9, characterized in that the formed slurry is drained to obtain a partially dehydrated paste.

11. A process according to any one of claims 8 to 11, characterized in that said slurry comprises 1% to 10% by weight, preferably 4% to 6% by weight, of dry matter.

**12.** A process for preparing fired heat insulating articles, characterized in that a heat insulating article according to any one of claims 1 to 7 or a heat insulating article obtained using the process of any one of claims 8 to 11 is fired.

**Patentansprüche**

1. Thermisch isolierender Artikel, dadurch gekennzeichnet, daß er Mineralfasern, mindestens einen mineralischen Füllstoff und ein Bindemittel umfaßt, das aus einer Mischung von Xanthangummi und kationischer Stärke besteht.

2. Thermisch isolierender Artikel nach Anspruch 1, dadurch gekennzeichnet, daß er in Form von Tafeln, Platten oder einem gegossenen Gegenstand vorliegt.

3. Thermisch isolierender Artikel nach einem der Ansprüche 1 und 2, dadurch gekennzeichnet, daß er 30 Gew.-% bis 90 Gew.-% Mineralfasern, 5 Gew.-% bis 60 Gew.-% von mindestens einem mineralischen Füllstoff und 2 Gew.-% bis 10 Gew.-% des genannten Bindemittels umfaßt.

4. Thermisch isolierender Artikel nach einem der Ansprüche 1 bis 3, dadurch gekennzeichnet, daß das Gewichtsverhältnis zwischen dem Xanthangummi und der kationischen Stärke zwischen 1/2 und 1/10, vorzugsweise zwischen 1/4 und 1/8 beträgt.

5. Thermisch isolierender Artikel nach einem der Ansprüche 1 bis 4, dadurch gekennzeichnet, daß die Mineralfasern keramische Fasern sind.

6. Thermisch isolierender Artikel nach einem der Ansprüche 1 bis 5, dadurch gekennzeichnet, daß der mineralische Füllstoff eine kolloidale Kieselerde oder Bentonit ist.

7. Thermisch isolierender Artikel nach einem der Ansprüche 1 bis 6, dadurch gekennzeichnet, daß er außerdem mindestens als Zusatzstoff ein Flockungsmittel wie ein anionisches synthetisches Polymer, Ammoniak und/oder eine quaternäre Ammoniumverbindung umfaßt.

8. Verfahren zur Herstellung eines thermisch isolierenden Artikels, dadurch gekennzeichnet, daß man die folgenden Stufen durchführt:

   a) man mischt Mineralfasern, mindestens einen mineralischen Füllstoff, ein Bindemittel, das aus einer Mischung von Xanthangummi und kationischer Stärke besteht, und gegebenenfalls als Zusatzstoff mindestens ein Flockungsmittel wie ein anionisches synthetisches Polymer, Ammoniak und/oder eine quaternäre Ammoniumverbindung mit Wasser, so daß eine Aufschlämmung gebildet wird,
   b) man bringt die genannte Aufschlämmung in Form,
   c) man trocknet die geformte Aufschlämmung.

9. Verfahren nach Anspruch 8, dadurch gekennzeichnet, daß die genannte Aufschlämmung durch Gießen, Formgießen, Kalandrieren und/oder Pressen in Form gebracht wird.

10. Verfahren nach einem der Ansprüche 8 und 9, dadurch gekennzeichnet, daß die Aufschlämmung in Form gebracht und zentrifugiert wird, so daß man eine teilweise entwässerte Paste erhält.

11. Verfahren nach einem der Ansprüche 8 bis 10, dadurch gekennzeichnet, daß die genannte Aufschlämmung 1 Gew.-% bis 10 Gew.-%, vorzugsweise 4 Gew.-% bis 6 Gew.-% Trockensubstanz umfaßt.

12. Verfahren zur Herstellung von thermisch isolierenden, gebrannten Artikel, dadurch gekennzeichnet, daß man einen thermisch isolierenden Artikel nach irgendeinem der Ansprüche 1 bis 7 oder einen thermisch isolierenden Artikel, wie er gemäß dem Verfahren nach irgendeinem der Ansprüche 8 und 11 erhalten wurde, brennt.